# EUROPEAN PATENT SPECIFICATION

(11) **EP 1 747 766 B1**
(45) Date of publication and mention of the grant of the patent: **13.10.2010**
(21) Application number: 06115998.4
(22) Date of filing: 23.06.2006
(51) Int. Cl.: A61C 17/20

(54) **Ultrasonic dental unit with adaptable handpiece**
Zahnärztliche Ultraschalleinheit mit anpassungsfähigem Handstück
Appareil dentaire à ultrasons avec pièce à main adaptable

(30) Priority: 25.07.2005 IL 16985305
(43) Date of publication of application: 31.01.2007
(73) Proprietor: Deldent Ltd., 49372 Petach-Tikva (IL)
(72) Inventor: Edel, Alan, 49653 Petach Tiqwa (IL); Edel, Julian, 49222 Petach Tiqwa (IL)
(74) Representative: Modiano, Micaela Nadia

(56) References cited:
- EP-A- 1 262 152
- US-A- 3 809 977
- US-A- 4 168 447
- US-A- 6 164 968
- US-A1- 2004 063 064
- US-A1- 2005 227 201

## Description

### TECHNICAL FIELD

The present invention relates to ultrasonic dental units, and, more particularly, to an ultrasonic dental unit with a piezoceramic handpiece adaptable to accept dental tips having different thread patterns.

### BACKGROUND ART

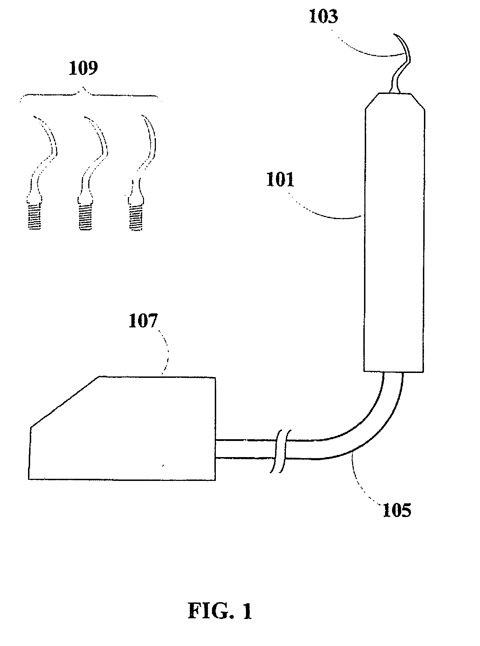

Figure 1 shows the overall configuration of a typical prior art ultrasonic dental unit. A handpiece **101** induces ultrasonic vibrations in a dental tip **103.** A cable **105** connects handpiece **101** to a control unit **107,** which provides electrical energy to handpiece **101** for producing the ultrasonic vibrations. The practitioner manipulates handpiece **101** so that dental tip **103** comes into contact with the patient's teeth or other oral tissue to attain the desired therapeutic effects. Cable 105 typically also provides water flow to handpiece **101** for delivery into the patient's mouth via tip **103.** Tip **103** is removable from handpiece **101,** and a tip selected from a set of additional tips **109** can be substituted Dental tips are replaced because of wear, and also to provide specialized dental tips having optimal shapes, sizes, and surface textures for use in different dental procedures.

It is noted that an exemplary use of ultrasonic dental units is for scaling operations (an "ultrasonic dental scaler"), but it is understood that this is a non-limiting use, and that other dental procedures are frequently carried out with the assistance of ultrasonic dental units. The term "dental unit" denotes the entire system as used by the practitioner, including the control unit, handpiece and dental tip.

Handpiece **101** contains an ultrasonic transducer for converting the electrical energy from control unit **107** into ultrasonic vibrations. Ultrasonic dental units fall into one of the two following general categories, according to the type of ultrasonic transducer utilized: magnetostrictive; and piezoceramic. Piezoceramic ultrasonic dental units typically feature proprietary dental tip-handpiece interconnectian geometries which vary from one manufacturer to another. In particular, the thread patterns employed by one manufacturer are typically incompatible with the thread patterns employed by another manufacturer Thus, a piezoceramic dental tip produced by one manufacturer typically cannot be utilized on a piezoceramic handpiece produced by another manufacturer.

Furthermore, as is discussed below herein, attempting to adapt a dental tip produced by one manufacturer to a piezoceramic handpiece produced by another manufacturer usually lowers the ultrasonic resonant frequency of the handpiece, and the lower resonant frequency usually fails to operate properly with the control unit (such as control unit **107** of Figure 1).

These limitations are unfortunate, because it is desirable to be able to interchange dental tips manufactured by different manufacturers on the same handpiece. It is therefore desirable that adapting a dental tip to a handpiece not substantially alter the resonance characteristics of the combination. Resonance characteristics include, but are not limited to the following values (generally measured in Hz): the frequency of the resonance peak; width of the resonance peak; and the extent of the resonance peak. The resonance peak is typically a characteristic of the entire system, including: the control unit electronics; the components of the handpiece, such as the components of the ultrasonic transducer; the dental tip; and other components attached thereto, such as adapters. As is well-known in the art, the resonance characteristics are important parameters in attaining proper performance of the dental unit. Maximum vibrational power input to the dental tip is attained when the control unit supplies electrical energy at the frequency of the resonance peak, and power input to the dental tip diminishes when the frequency of the electrical excitation energy deviates from that of the resonance peak. If, in a non-limiting example, the control unit (such as control unit **107** in Figure 1) cannot supply electrical power at a frequency within the resonance peak, the system will not operate properly, and may not operate at all. It is appreciated in the art that any change or addition to the system (such as substitution of a different dental tip) typically alters the resonance characteristics of the system. Not all alterations, however, are significant to the operation of the dental unit. A small change in resonance peak, for example, may have only a negligible effect on the overall operation of the dental unit. Therefore, the term "not substantially alter" herein denotes that a change to the handpiece and/or dental tip (including, but not limited to the use of an adapter) does not affect the performance of the dental unit in a noticeable way to the practitioner.

US Patent No. 3,809,977 to Balamuth a coupling member designed to transmit an optimum amplitude of longitudinal vibration and hyper-accelerations to a dental tip. Balamuth discloses a design the use of different tools or elements including dental tips with the same handpiece. The '977 patent does not teach use of an adapter to match the resonance frequency of different tips to the resonant frequency of the handpiece. It rather splits the coupling member allowing connection of different removable elements with different mass. This changes the resonant frequency of the handpiece. To compensate for the change a feedback signal from sensing piezoelectric element is provided to a series variable resistor that sets the driver frequency to the "desired operating frequency."

There is thus a need for, and it would be highly advantageous to have, a piezoceramic ultrasonic dental unit unit with a handpiece that is adaptable to utilize dental tips produced by different manufacturers, and without encountering operational failures caused by shifts in the resonant frequency of the handpiece. This goal is met by the present invention.

### SUMMARY OF THE INVENTION

The present invention is of a piezoceramic ultrasonic dental unit with an adaptable handpiece which can be used with ultrasonic dental tips provided by different manufacturers.

An objective of the present invention is to allow the use of dental tips of different manufacture and different thread patterns to be used with the same handpiece.

Another objective of the present invention is to allow the use of dental tip adapters without causing substantial alteration in the resonance characteristics of the dental unit.

In certain embodiments of the present invention, the ultrasonic transducer of the handpiece contains interchangeable sections which accommodate the different thread patterns utilized by different manufacturers for ultrasonic tips. Various embodiments of the present invention accommodate male-threaded tips; and various other embodiments of the present invention accommodate female-threaded tips.

In another embodiment of the present invention, the control unit of the piezoceramic ultrasonic dental unit (such as control unit **107** of Figure 1) employs an ultrasonic power generator which is capable of generating ultrasonic power at the resonant frequency of the handpiece, regardless of the lowering of the resonant frequency caused by adapting different tips to the handpiece,

In all embodiments of the present invention, the installation of a tip on the handpiece, regardless of the thread pattern of the tip and the specific means of adapting that thread pattern to the handpiece, proper operation of the tip with the handpiece is assured, with respect to: satisfactory mechanical coupling of the tip to the handpiece; suitable ultrasonic performance; and normal delivery of water or other fluids through the tip.

Therefore, according to the present invention there is provided a dental unit having a resonant frequency and including a piezoceramic ultrasonic handpiece and a dental tip with a threaded mounting portion, characterized by an adapter connecting the handpiece to the dental tip, the adapter further including a fastening means for attaching the adapter to the handpiece; and threads for attaching the threaded mounting portion of the dental tip to the adapter; wherein the attached adapter does not substantially alter the resonant frequency of the handpiece.

Moreover, according to the present invention there is provided a handpiece of a piezoceramic ultrasonic dental unit containing a piezoceramic ultrasonic transducer, characterized in that the transducer is operative to attach dental tips having threaded mounting portions with different thread patterns, and that the transducer comprises: a concentrator, for delivering ultrasonic vibrational energy to dental tips; and at least one adaptive extension for the concentrator, the at least one adaptive extension having a threaded portion compatible with the threaded mounting portion of at least one dental tip, for attaching thereto; such that the at least one adaptive extension and the concentrator are operative to be fastened together.

In addition, according to the present invention there is provided a piezoceramic handpiece for generating ultrasonic vibrations, characterized by being adaptable to attach dental tips having threaded mounting portions with different thread patterns, and such that the handpiece comprises: a concentrator, for carrying ultrasonic vibrations generated in the handpiece; and an adaptive extension, for attaching to the concentrator, the adaptive extension having a threaded portion compatible with the threaded mounting portion of at least one dental tip, and operative to attach the at least one dental tip thereto; such that the adaptive extension is removable from the concentrator.

Furthermore, according to the present invention there is provided a piezoceramic handpiece for generating ultrasonic vibrations, characterized by being adaptable to attach dental tips having threaded mounting portions with different thread patterns, and such that the handpiece comprises: a concentrator, for carrying ultrasonic vibrations generated in the handpiece; and an adaptive extension, for attaching to the concentrator, the adaptive extension having a threaded portion compatible with the threaded mounting portion of at least one dental tip, and operative to attach the at least one dental tip thereto; such that the adaptive extension is removable from the concentrator.

Also, according to the present invention there is provided a adaptive extension for attaching to the concentrator of a piezoceramic handpiece and for attaching to a dental tip having a threaded mounting portion, characterized in that the adaptive extension includes: means of attaching to the concentrator; and a threaded portion having threads compatible with the threaded mounting portion of the dental tip.

### BRIEF DESCRIPTION OF THE DRAWINGS

The invention is herein described, by way of example only, with reference to the accompanying drawings, wherein:

Figure 1 illustrates the overall configuration of a typical ultrasonic dental unit.

Figure 2 shows a longitudinal cross-section of a typical prior art piezoceramic ultrasonic dental handpiece with tip attached.

Figure 3 shows a longitudinal cross-section of a typical prior art piezoceramic ultrasonic dental handpiece concentrator.

Figure 4 shows a longitudinal cross-section of a typical prior art piezoceramic ultrasonic dental handpiece rear load.

Figure 5 shows a longitudinal cross-section of a typical prior art ultrasonic dental handpiece piezoceramic stack.

Figure 6 shows longitudinal cross sections of typical prior art threaded ultrasonic dental tips and their corresponding thread patterns

Figure 7 shows a longitudinal cross-section of an adapter according to an embodiment of the present invention, for adapting a concentrator female thread pattern to a tip female thread pattern.

Figure 8 shows a longitudinal cross-section of an adapter according to an embodiment of the present invention, for adapting a concentrator female thread pattern to a tip male thread pattern.

Figure 9 shows a longitudinal cross-section of an adapter according to an embodiment of the present invention, for adapting a concentrator male thread pattern to a tip female thread pattern.

Figure 10 shows a longitudinal cross-section of an adapter according to an embodiment of the present invention, for adapting a concentrator male thread pattern to a tip male thread pattern.

Figure 11 shows a longitudinal cross-section of a rear load according to an embodiment of the present invention compared with that of a typical prior art rear load.

Figure 12 shows a longitudinal cross-section of a convertible concentrator according to an embodiment of the present invention, and compared with that of a typical prior art concentrator.

Figure 13 shows longitudinal cross-sections of a convertible concentrator with different tips mounted, according to an embodiment of the present invention, and compared with that of a typical prior art concentrator.

Figure 14 shows a longitudinal cross-section of an adapting extension for a convertible concentrator according to an embodiment of the present invention, having a threadless connection to the convertible concentrator, and having a male thread for attaching a dental tip with a female thread.

Figure 15 shows a longitudinal cross-section of an adapting extension for a convertible concentrator according to an embodiment of the present invention, having a threadless connection to the convertible concentrator, and having a female thread for attaching a dental tip with a male thread.

### DESCRIPTION OF THE PREFERRED EMBODIMENTS

The principles and operation of an adaptable ultrasonic dental handpiece according to the present invention may be understood with reference to the drawings and the accompanying description.

### Typical Prior-Art Ultrasonic Piezoceramic Handpiece Construction and Operation

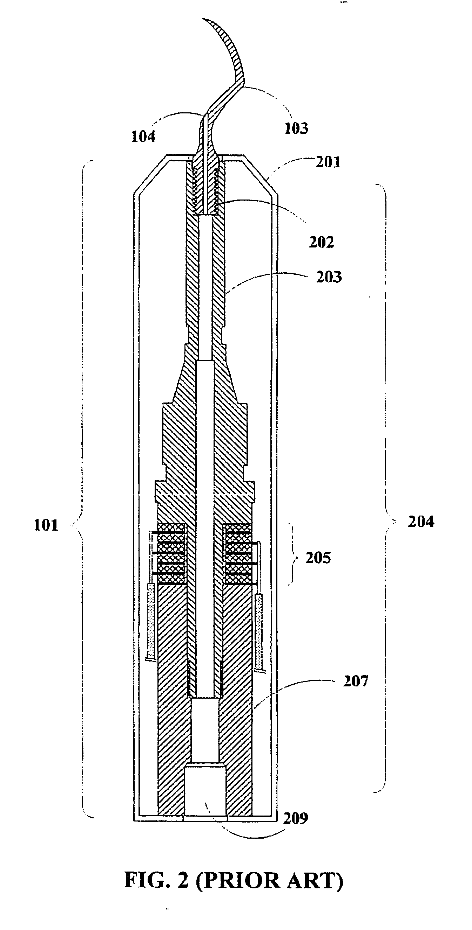

Figure 1, as previously described, illustrates the overall configuration of a typical ultrasonic dental unit. Figure 2 shows the cross-section of prior art piezoceramic handpiece **101** with attached tip **103.** Inside a cover **201** is the ultrasonic transducer **204,** which is assembly that includes a concentrator **203,** a piezoceramic stack **205,** and a rear load **207.** An inlet **209** connects with cable **105** (Figure 1) to provide flow for water or other fluids through handpiece **101** into a channel **104** in tip **103.** Tip **103** screws into a compatible threaded portion **202** of concentrator **203.** In Figure 2, concentrator **203** and rear load **207** are shown with distinct cross-hatch patterns to more clearly delineate the boundaries.

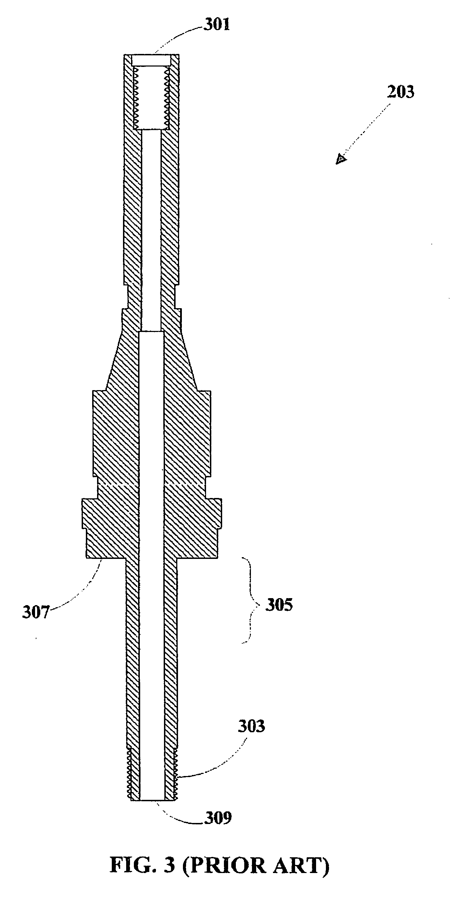

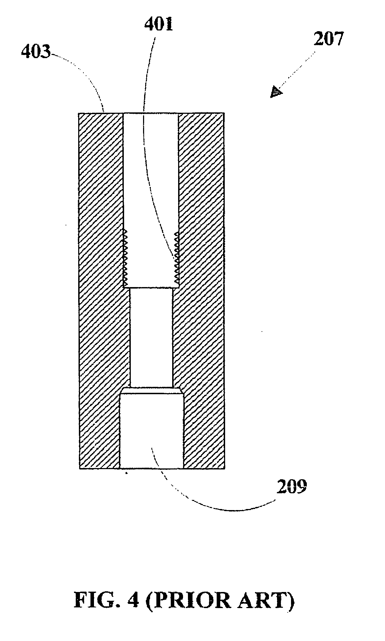

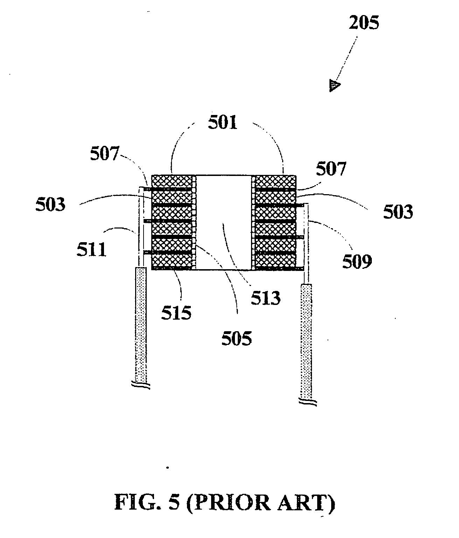

Figure 3 shows more detail of prior art concentrator **203.** A threaded section **301** is a fastening means for attaching tip **103** (Figure 2), and a threaded section **303** joins with a corresponding threaded section **401** (Figure 4) of rear load **207** (Figure 2 and Figure 4). A shank region **305** accepts piezoceramic stack **205** (Figure 2 and Figure 5), which abuts a shoulder **307.** A hollow channel **309** along the axis of concentrator **203** conducts water or other fluids, to allow flow through channel **104** in tip **103** (Figure 2).

Figure 4 shows more detail of prior art rear load **207.** Threaded section **401** accepts threaded section **303** of concentrator **203** (Figure 2 and Figure 3). Piezoceramic stack **205** (Figure 2 and Figure 5) abuts a shoulder **403.** Inlet **209** is as previously described (Figure 2).

Figure 5 shows more detail of prior art piezoceramic stack **205.** An annular insulating piezoceramic disk **501** is stacked above an annular conducting plate **507.** Another annular piezoceramic disk **503** is stacked below annular conducting plate **507,** such that a series of annular piezoceramic disks alternating with conducting plates forms a stack. An inner cylindrical insulating sleeve **505** (of Teflon or similar material) insulates the conducting plates from shank region **305** (Figure 3), which is inserted through a central passage **513** in the annular stack. Electrical leads **509** and **511,** respectively are connected to alternate conducting plates.

When stack 205 is installed between concentrator 203 and rear load 207 as shown in Figure 2, the top surface of disk **501** abuts shoulder **307** (Figure 3), and the bottom surface of conducting plate **515** abuts shoulder **403** (Figure 4). When an alternating voltage is placed across leads **509** and **511,** the piezoceramic annular disks will have that voltage impressed across them, and will vibrate at the frequency of the alternating voltage. This vibration is coupled mechanically to the handpiece mass, principally comprising concentrator **203** and rear load **207,** and from there to tip **103.**

As is widely appreciated, the piezoceramic stack excites vibrational energy into the handpiece most efficiently at the vibrational resonant frequency of the handpiece-tip assembly. The resonant frequency is a function of the mass distribution and shape of the handpiece-tip assembly, and the acoustical characteristics of the materials which make up the handpiece and the tip. Not only does the resonant frequency depend on the mass distribution, but the characteristics of the standing waves set up in the handpiece and tip (for example, the location of the nodes) also depend on the mass distribution.

Furthermore, the electronic circuitry of the control unit (as in control unit **107**) is typically tuned to operate at or near the projected resonant frequency of the handpiece-tip assembly. There is generally some latitude in the frequency of operation of the control unit, because of variations in resonant frequency and the acoustical characteristics of different tips. Usually, however, there is limited latitude in the frequency range For example, a typical handpiece (manufactured by Deldent Ltd. of Petach Tikva, Israel) designated as having a resonant frequency of 30 KHz actually has a resonant frequency nearer 29.5 KHz, The use of different tips (also manufactured by Deldent) alters the resonant frequency as shown in the following table:

**Table 1 Resonant Frequencies for Dental Tips**

| **Dental Tip** | **Resonant Frequency (KHz)** |
|---|---|
| Deldent "Universal" | 29.5 |
| Deldent "Round" | 29.1 |
| Deldent "Flat" | 29.2 |
| Deldent "Thin" | 28.9 |

It is noted that the names used in the tables for the different dental tip styles are for convenience of reference in the present application, and are not necessarily the same as the terms used to identify these dental tips by their respective manufacturers.

The control unit for the handpiece whose resonant frequencies are shown in Table 1 is capable of operation down to a resonant frequency of roughly 27.5 KHz. Typically, below this frequency the system does not operate. The lower frequency limit is particularly important, as is shown below, because adapting tips of different thread patterns to a handpiece typically causes a reduction of the resonant frequency. Moreover, even if the handpiece-tip assembly operates with the control unit at a lower frequency, it is to be expected that an impedance mismatch may result in lower power delivery to the handpiece, and overall reduced performance of the ultrasonic unit in use.

### Adapting to Tips of Different Thread Patterns

Typically, a manufacturer of ultrasonic dental equipment produces tips that screw directly into the handpiece concentrator, as illustrated in Figure 2, which shows tip **103** screwing directly into concentrator **203.** The present invention relates only to ultrasonic dental tips which are manufactured with a threaded mounting portion for screwing into a handpiece, and, accordingly, the present application addresses only threaded ultrasonic dental tips.

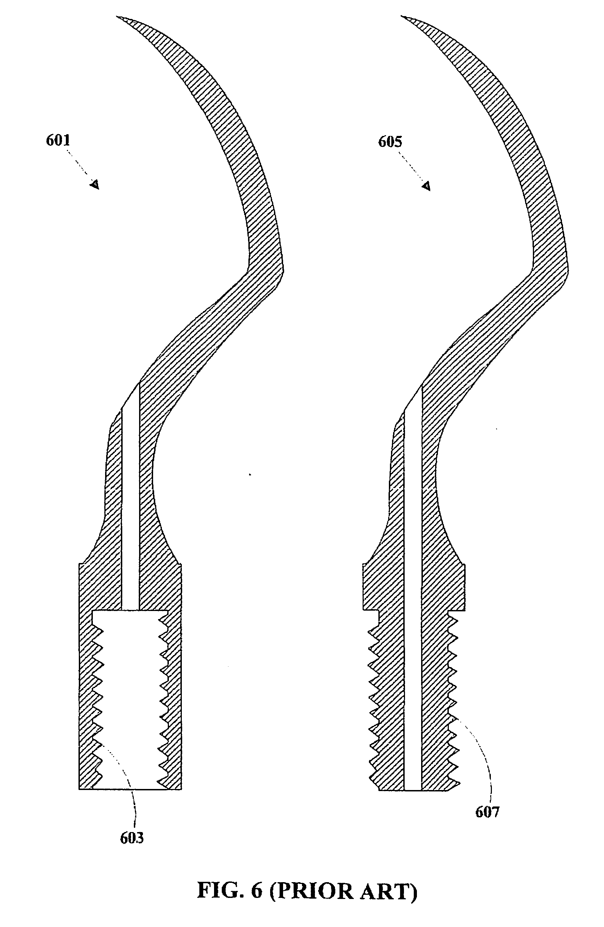

In Figure 2, dental tip **103** is shown with a male threaded mounting portion, and in Figure 3, concentrator **203** is shown with female threaded mounting portion **301.** Other thread patterns are also possible, however, and Figure 6 illustrates the basic different possible configurations: A tip **601** has a female thread **603,** whereas a tip **605** has a male thread **607.** In addition to the different qualitative sense of male or female threading, different quantitative thread parameters are also important, including, but not limited to: shank diameter; shank length; thread diameter; and thread pitch. All thread parameters must be compatible for a tip to attach to a handpiece.

In general, adapters according to embodiments of the present invention have means for being fastened to the handpiece, as well as threads for attaching to dental tips. As noted previously, the present invention adapts to threaded dental tips.

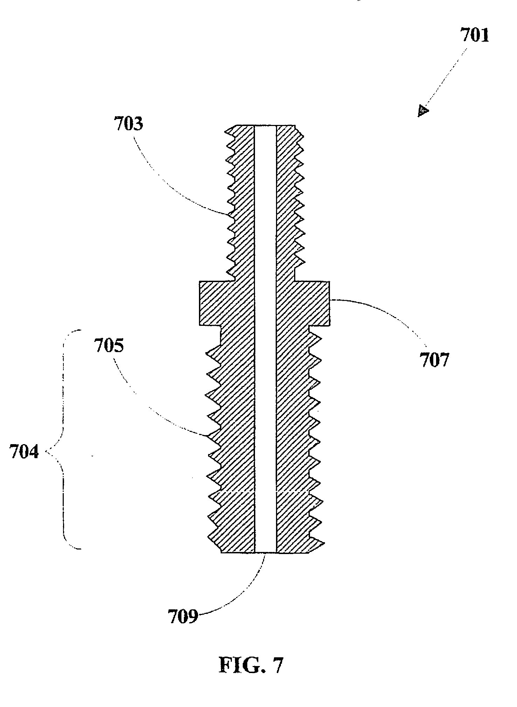

Figure 7 illustrates an adapter **701** according to an embodiment of the present invention, for connecting a female-threaded tip (such as tip **601** in Figure 6) to a handpiece having a female thread. A male-threaded section **703** screws into the female thread of the tip, and a male-threaded section **705** screws into the female thread of the handpiece. In this non-limiting example, threaded section 705 acts as a fastening means **704** to attach adapter **701** to the handpiece. An axial channel **709** carries fluids from the handpiece to the tip. In a non-limiting embodiment of the present invention, a middle shank section **707** accepts a tool (not shown), such as a key or similar for tightening.

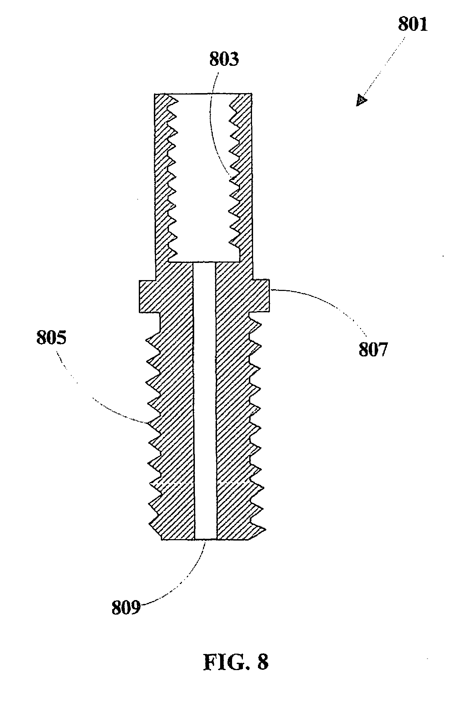

Figure 8 illustrates an adapter **801** according to an embodiment of the present invention, for connecting a male-threaded tip (such as tip **605** in Figure 6) to a handpiece having a female thread. A female-threaded section **803** screws onto the male thread of the tip, and a male-threaded section **805** screws into the female thread of the handpiece. A middle shank section **807** accepts a tool (not shown) for tightening. An axial channel **809** carries fluids from the handpiece to the tip. Although qualitatively, a male-threaded tip screws into a female-threaded handpiece, adapter **801** may nevertheless be necessary to adapt to different quantitative parameters of the thread patterns, including, but not limited to: shank diameter, shank length; thread diameter; and thread pitch. Adapter **801** may also be used to provide an extension to the handpiece, and may be useful even for compatible thread patterns.

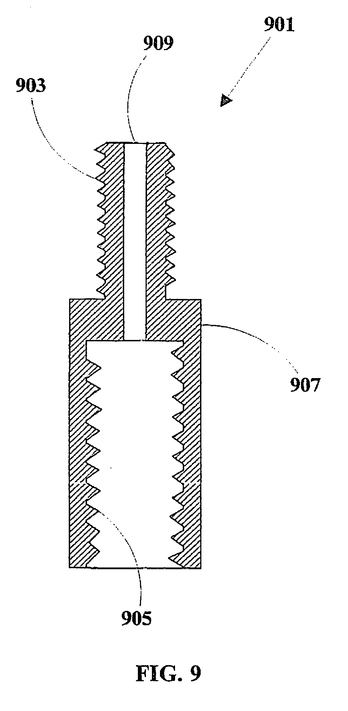

Figure 9 illustrates an adapter **901** according to an embodiment of the present invention, for connecting a female-threaded tip (such as tip **601** in Figure 6) to a handpiece having a male thread. A male-threaded section **903** screws into the female thread of the tip, and a female-threaded section **905** screws onto the male thread of the handpiece. A middle shank section **907** accepts a tool (not shown) for tightening. An axial channel **909** carries fluids from the handpiece to the tip. Although qualitatively, a female-threaded tip screws onto a male-threaded handpiece, adapter **901** may nevertheless be necessary to adapt to different quantitative parameters of the thread patterns, including, but not limited to: shank diameter, shank length; thread diameter; and thread pitch. Adapter **901** may also be used to provide an extension to the handpiece, and may be useful even for compatible thread patterns.

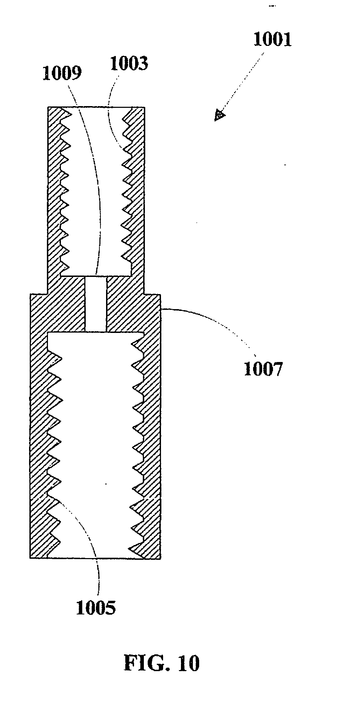

Figure 10 illustrates an adapter **1001** according to an embodiment of the present invention, for connecting a male-threaded tip (such as tip **605** in Figure 6) to a handpiece having a male thread. A female-threaded section **1003** screws onto the male thread of the tip, and a female-threaded section **1005** screws onto the male thread of the handpiece. A middle shank section **1007** accepts a tool (not shown) for tightening. An axial channel **1009** carries fluids from the handpiece to the tip.

### Resonance Considerations

In using an adaptive fitting, such as illustrated and discussed above that adapts one thread to another, it is necessary to consider the effect on resonant frequency of the fitting. As noted previously, the inclusion of an adapter lowers the resonant frequency of the handpiece-tip assembly. As further noted, this typically reduces the power delivery to the tip and results in diminished performance, Further. as is illustrated in Table 2 below, the lowering of the resonant frequency caused by an adapter can lead to operational failure.

For Table 2, the handpiece is manufactured by Deldent Ltd. of Petach Tikva, Israel, and the tips are manufactured by EMS (Electro Medical Systems SA of Nyon, Switzerland) and by Satelec (Satelec Medical SA of Merignac, France).

**Table 2. Resonant Frequencies for Dental Tips with Adapters**

| | **Resonant Frequency (KHz)** | | | |
|---|---|---|---|---|
| | **Stainless Steel Adapter** | | **Titanium Adapter** | |
| **Dental Tip** | **Normal Rear Load** | **Shortened Rear Load** | **Normal Rear Load** | **Shortened Rear Load** |
| EMS "Universal 1" | ― | 27.9 | 28.4 | 28.6 |
| EMS "Universal 2" | ― | 28.0 | 28.4 | 28.6 |
| EMS "Flat" | 28.4 | 29.3 | 29.3 | 29.8 |
| EMS "Thin 1" | ― | 28.0 | 28.7 | 28.8 |
| EMS "Thin 2" | ― | 28.4 | 28.8 | 28.9 |
| Satelec "Universal" | ― | ― | ― | 28.1 |

In Table 2, a dashed line (―) indicates that the resonant frequency is lowered by such an amount that the ultrasonic dental scaling unit is inoperative.

In an embodiment of the present invention, an adapter is made of stainless steel, In another embodiment of the present invention, an adapter is made of titanium.

Table 2 shows that the use of a stainless steel adapter is especially problematic, in that only one of the selected tips (the EMS "flat" tip) operates with such an adapter. The use of a titanium adapter is preferable, allowing operation with all but the Satelec "Universal" tip. A comparison of the respective densities of stainless steel (specific gravity 7.7 to 7.8) versus titanium (specific gravity 4.5 to 4.7 for a typical titanium alloy) suggests that it is desirable to minimize the mass of the adapter. This will aid in minimizing the change in the mass distribution In certain embodiments of the present invention, therefore, the adapter is made of material having a specific gravity substantially not exceeding 7. In other embodiments of the present invention, the adapter is made of material having a specific gravity substantially not exceeding 5. In still other embodiments of the present invention, the adapter is made of material having a specific gravity substantially not exceeding 3. In further embodiments of the present invention, the adapter is made as small as possible to reduce the mass thereof Although it is desirable to minimize the density and mass of the adapter, it is also necessary that the adapter have good acoustical properties, in order to properly transmit the ultrasonic vibrations.

As noted above, even though operation may be obtained by the use of a titanium adapter, the results are still not completely satisfactory, because at least one tip (the Satelec "Universal" tip) still fails to operate. In addition, as previously noted, operation at lowered resonant frequencies may not have optimum performance. Therefore, further embodiments of the present invention raise the resonant frequency to compensate for the lowering effect of the adapter.

### Mass Reduction of Ultrasonic Transducer

According to certain embodiments of the present invention, the resonant frequency of the handpiece-adapter-tip assembly is adjusted upwards to compensate for the frequency-lowering effect of the adapter by selectively reducing the mass of the ultrasonic transducer.

Reducing the mass is a way of modifying the mass distribution of the ultrasonic transducer, in order to reduce or eliminate the lowering of the resonant frequency of the handpiece when an adapter is used. Mass distribution can be modified in a number of different ways, including, but not limited to: removing material from a portion of the ultrasonic transducer; and substituting materials of different densities in portions of the ultrasonic transducer.

### Shortened Rear Load

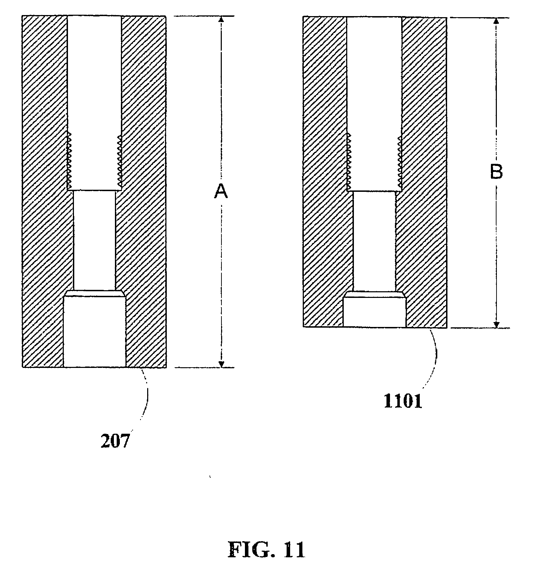

Figure 11 shows a cross-section of a rear load **1101** according to an embodiment of the present invention, compared with a cross-section of prior-art rear load **207.** The length of rear load **207** is shown as **A,** and the length of rear load **1101** is shown as B, such that B is less than A by a significant and substantial amount. As is shown in Table 2, use of shortened rear load **1101** raises the resonant frequency of the handpiece-adapter-tip assembly, and improves operation of the adapted tip, so that all tips used operate properly and within an optimal frequency range.

Table 3, below, shows that use of the shortened rear load does not interfere with operation of the handpiece-tip assembly without an adapter.

**Table 3. Resonant Frequencies for Dental Tips using Shortened Rear Load**

| **Dental Tip** | **Resonant Frequency (KHz)** |
|---|---|
| Deldent "Universal" | 30.1 |
| Deldent "Round" | 29.7 |
| Deldent "Flat" | 29.9 |
| Deldent "Thin" | 29.5 |

### Convertible Concentrator

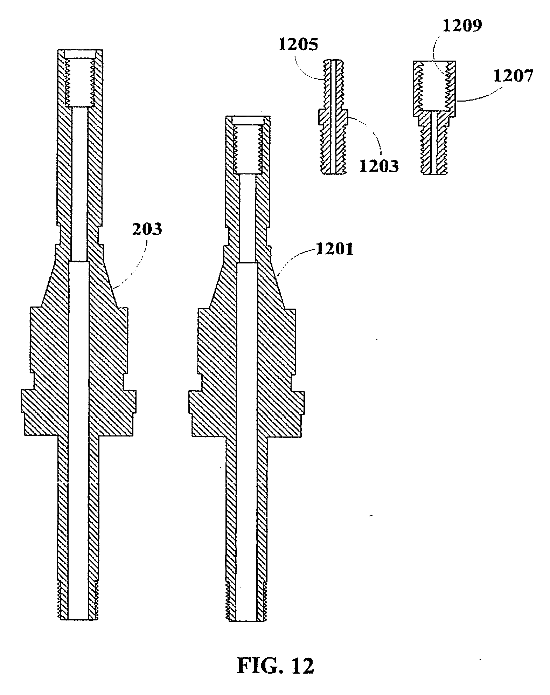

Figure 12 shows a convertible concentrator **1201** according to an embodiment of the present invention, as compared to prior-art concentrator **203.** Convertible concentrator **1201** is shorter than prior-art concentrator **203,** in order to accommodate the use of adapting extensions **1203** and **1207.** As illustrated in Figure 12, adapting extension **1203** has a male thread **1205** for attaching a tip with a female thread. Adapting extension **1207** has a female thread **1209** for attaching a tip with a male thread.

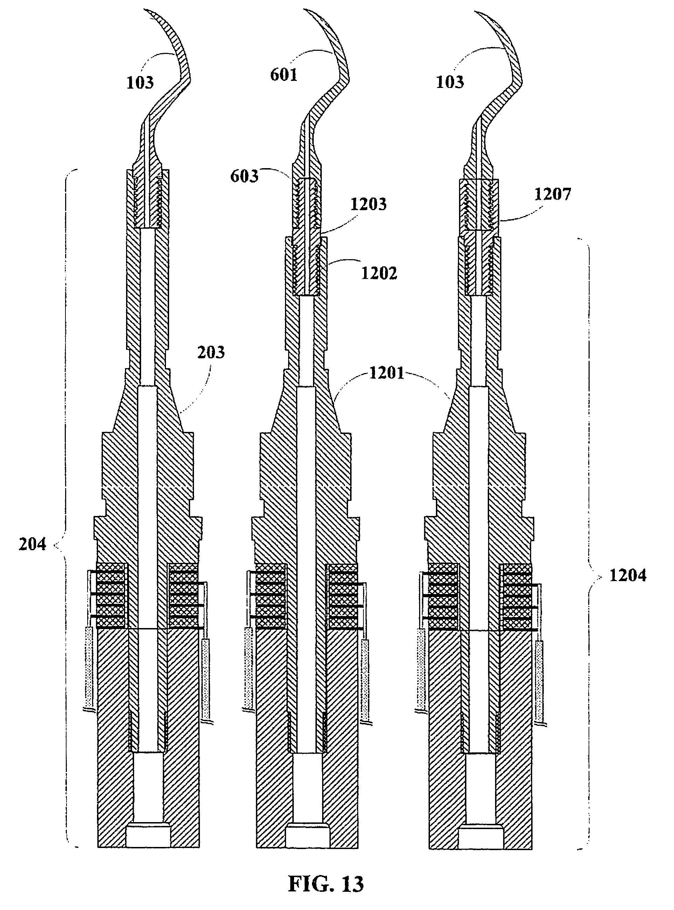

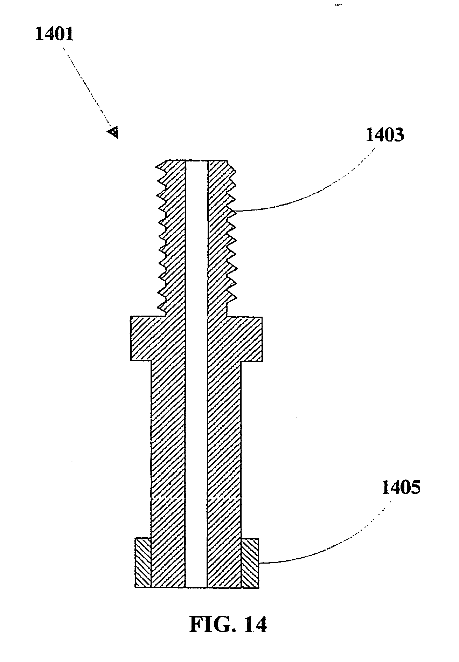

Figure 13 shows that the working length of convertible concentrator **1201** with adapting extensions and tips installed is substantially similar to that of prior-art concentrator **203** with tip **103** installed. Also indicated are ultrasonic transducer assembly **204** incorporating prior art concentrator **203** as previously discussed, and an ultrasonic transducer assembly **1204** incorporating convertible concentrator **1201.** By comparison, it can be seen that ultrasonic transducer **1204** has a mass distribution substantially different from that of ultrasonic transducer **204,** in order to compensate for the added mass of adapters **1203** and **1207.** It is noted that the overall lengths of the ultrasonic transducer - dental tip combination may be comparable, as illustrated in Figure 13, but are not necessarily the same for different configurations, and therefore the illustrations in Figure 13 are therefore non-limiting with regard to overall length. In Figure 13 it is seen that convertible concentrator **1201** with adapting extension **1203** takes tip **601,** whereas convertible concentrator **1201** with adapting extension **1207** takes tip **103.** It is noted that the threaded portion **1202** of convertible concentrator **1201** is typically not compatible with threaded portion **603** of dental tip 601. Indeed, as described elsewhere (as in Figure 14), the fastening means for coupling the adapter to the convertible concentrator is not limited to threaded sections. Convertible concentrator **1201** is not limited to being able to connect directly to dental tip **601,** and typically requires an adapting extension, such as adapting extension **1207.**

It may be readily appreciated from Figure 13 that a convertible concentrator according to the above-illustrated embodiment of the present invention, when fitted with an adapting extension and corresponding tip, as described above, has substantially the same mass distribution and acoustic characteristics as a prior art concentrator. The resulting convertible handpiece, therefore, will exhibit substantially the same resonant frequency characteristics as those of a prior-art handpiece, while being easily convertible by the practitioner to accommodate tips having different thread patterns. Accordingly, the control unit that provides electrical energy to the handpiece is configured to excite the handpiece over the normal frequency range for the (prior-art) dental tips. It is once again noted that the resonant frequency of the handpiece is determined in part by the mass distribution of the convertible concentrator, the adaptive extension, and the dental tip in combination.

In an embodiment of the present invention, adapting extensions **1203** and **1207** are fitted directly to tips **601** and **103,** respectively, and remain thereon during the useful life of the tips. Thus, adapting extensions **1203** and **1207** effectively convert tips **601** and **103,** respectively, to mount onto the same handpiece, thereby making the installation of various tips having different thread patterns as easy as installing a prior-art tip on a prior-art handpiece, while at the same time allowing complete versatility in tip selection. That is, in this embodiment the adapting extension is considered as part of the dental tip. It is noted that adapting extensions **1203** and **1207** may be reused; when a tip requires replacement due to wear or breakage, the adapting extension may be removed from the old tip and reused on a replacement tip.

In another embodiment of the present invention, an adapting extension is fitted to the convertible concentrator **1201,** according to the dental tips currently used by the practitioner. In this embodiment, the adapting extension remains on convertible concentrator **1201** during use, and the dental tips are alternately affixed to the adapting extension, and then removed therefrom. That is, in this embodiment the adapting extension is considered as part of the concentrator.

Which of the above embodiments is considered applicable is the choice of the practitioner, according to the dental tips employed. A practitioner who uses a variety of dental tips from different manufacturers would likely prefer the former embodiment, whereas a practitioner who uses dental tips from a specific manufacturer would likely prefer the latter embodiment.

Figure 14 illustrates an adapting extension **1401** according to an embodiment of the present invention, wherein adapting extension **1401** has male threads **1403** for attaching a tip having female mounting threads, but wherein adapting extension **1401** has a non-threaded connection to the converting concentrator. Instead of threads, adapting extension **1401** has other mounting and fastening means, including, but not limited to, bayonet mounting pins **1405,**

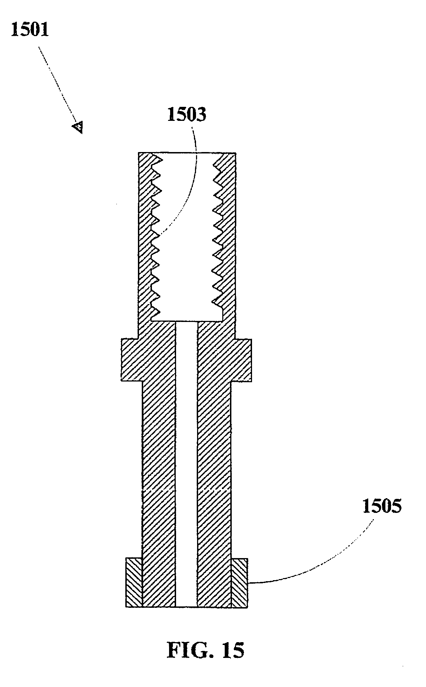

Likewise, Figure 15 illustrates an adapting extension **1501** according to an embodiment of the present invention, wherein adapting extension 1501 has female threads **1503** for attaching a dental tip having male mounting threads, but wherein adapting extension **1501** has a non-threaded connection to the converting concentrator. Instead of threads, adapting extension **1501** has other mounting and fastening means, including, but not limited to, press-fit; attachment by axial screw having an axial fluid channel; lateral set-screw attachment; and bayonet mounting pins **1505.** In another embodiment of the present invention, mounting and fastening means for adapting extension **1501** is done with reverse (i.e., left-handed) threads.

In an embodiment of the present invention, a dental tip cannot be attached directly to the convertible concentrator, but only via an adaptive extension.

It is also noted that a configuration such as that of the convertible concentrator described herein offers an additional advantage to the user. In the event of wear or damage (e.g., fracture) of the threads by which the dental tip is mounted to the handpiece, the worn or damaged threads may be easily and inexpensively replaced by the user, simply by replacing the adapting extension. This is also an advantage inherent in the use of adapters in general. In contrast, wear or damage to the threads in a prior-art handpiece may require replacement of the entire handpiece

### Resonance-Independent Excitation

When adapting a handpiece to accept a dental tip having an particular thread pattern, it is preferable to maintain the resonant frequency at which the dental tip was designed to operate. Even if it is possible to operate the handpiece at a reduced frequency (because of the resonance shift caused by using an adapter), the dental tip may operate improperly, as discussed below.

Dental tips are typically manufactured for use at a specified frequency in order to produce a specific oscillatory motion at the vertex of the tip. To attain the desired motion the tip is designed for a particular mode of vibration, such that a node in the vibration occurs at a point located at a specific distance from the vertex. It can be appreciated that whereas motion is minimized at a vibratory node, the internal forces and corresponding stresses are maximized at that vibratory node. Therefore, dental tips are designed to be able to withstand excessive stress in the vicinity of the intended node position. Operation at frequencies substantially different from the intended frequency result in a shift in the position of the node and therefore change the vibrational characteristics of the tip vertex, and also cause stress to be induced in the tip in locations which are not designed for withstanding stress. These conditions lead both to unsatisfactory tip vibration patterns and premature fatigue and fracture of the tip. For these reasons, it is not desirable to operate dental tips at frequencies other than that designated by the manufacturer.

The above considerations notwithstanding, in another embodiment of the present invention, shifts in the resonant frequency caused by the addition of adapters (such as adapters **701, 801, 901,** and **1001**) do not prevent operation, because control unit **107** (Figure 1) operates at the resonant frequency of the handpiece-adapter-tip assembly regardless of how the resonant frequency has been shifted. Ultrasonic excitation circuits which adjust to the resonant frequency are known in the art. Non-limiting means of implementing such circuits include the use of phase-lock loops and/or microprocessor controllers, whereby the control unit does not involve tuned circuits, and is therefore not sensitive to shifts in the resonant frequency.

This embodiment, however, does allow for shifts in the resonant frequency of the handpiece-tip assembly which is typically undesirable, as detailed above.

While the invention has been described with respect to a limited number of embodiments, it will be appreciated that many variations, modifications and other applications of the invention may be made.

## Claims

1. A dental unit having a resonant frequency and comprising a control unit (107), a piezoceramic ultrasonic handpiece (101) including a transducer (1204) and a dental tip (601, 605) with a threaded mounting portion (603, 607), said handpiece (101) **characterized by** an adapter (701, 801, 901, 1001, 1401, 1501) having at least a threaded portion (703, 803, 903, 1003, 1403, 1503) and a fastening means (705, 805, 905, 1005, 1405, 1505) and wherein said threaded portion (703, 803, 903, 1003, 1403, 1503) is attached to a corresponding threaded portion (603, 607) of said dental tip (601, 605) and said fastening means (705, 805, 905, 1005, 1405, 1505) is attached to a corresponding portion of said handpiece (101), wherein the mass distribution of said transducer (1204) depends on the mass of the adapter (701, 801, 901, 1001, 1401, 1501).

2. The dental unit of claim 1, wherein said fastening means (705, 805, 905, 1005, 1405, 1505) of said adapter (701, 801, 901, 1001, 1401, 1501) are one of threads (705, 805, 905, 1005) or bayonet mounting pins (1405, 1505).

3. The dental unit according to claim 2, wherein said adapter (701, 801, 901, 1001, 1401, 1501) is made of a material that has a specific gravity substantially not in excess of 7.

4. The dental unit according to claim 1, wherein said transducer (1204) comprises:
a) a rear load (1101) having an adjustable mass distribution and said rear load mass distribution being adjustable by reducing the length of said rear load (1101), or
b) a concentrator (1201) having an adjustable mass distribution and wherein said concentrator (1201) mass distribution is adjusted by reducing the length of said concentrator (1201).

5. The dental unit according to claim 4, wherein the transducer (1204) is a piezoceramic ultrasonic transducer.

6. The dental unit of claim 4, wherein said concentrator (1201) is not directly attached to said at least one dental tip (601, 605).

7. The dental unit of claim 1, wherein said resonant frequency is that of the handpiece (101) with said dental tip (601, 605) attached, and wherein the operating frequency range of the control unit (107) includes the resonant frequency.

8. The dental unit according to claim 1, wherein the threaded mounting portion (603, 607) of said dental tip (601, 605) has male (607) or female (603) mounting threads.

## Patentansprüche

1. Eine zahnärztliche Einheit mit einer Resonanzfrequenz, die Folgendes umfasst: eine Steuereinheit (107), ein piezokeramisches Ultraschall-Handstück (101), das einen Wandler (1204) und eine Dentalspitze (601, 605) mit einem Montageabschnitt (603, 607) mit Gewinde einschließt, wobei das Handstück (101) durch einen Adapter (701, 801, 901, 1001, 1401, 1501) **gekennzeichnet** ist, der mindestens einen Abschnitt (703, 803, 903, 1003, 1403, 1503) mit Gewinde und ein Anbringungsmittel (705, 805, 905, 1005, 1405, 1505) hat und wobei der Abschnitt (703, 803, 903, 1003, 1403, 1503) mit Gewinde an einem entsprechenden Anschnitt (603, 607) mit Gewinde der Dentalspitze (601, 605) angebracht ist und wobei das Anbringungmittel (705, 805, 905, 1005, 1405, 1505) an einem entsprechenden Abschnitt des Handstücks (101) angebracht ist, wobei die Massenverteilung des Wandlers (1204) von der Masse des Adapters (701, 801, 901, 1001, 1401, 1501) abhängt.

2. Die zahnärztliche Einheit gemäß Anspruch 1, wobei die Anbringungsmittel (705, 805, 905, 1005, 1405, 1505) des Adapters (701, 801, 901, 1001, 1401, 1501) entweder Gewinde (705, 805, 905, 1005) oder Bijonettmontagestifte (1405, 1505) sind.

3. Die zahnärztliche Einheit gemäß Anspruch 2, wobei der Adapter (701, 801, 901, 1001, 1401, 1501) aus einem Material besteht, das ein spezifisches Gewicht hat, das 7 im Wesentlichen nicht überschreitet.

4. Die zahnärztliche Einheit gemäß Anspruch 1, wobei der Wandler (1204) Folgendes umfasst:
a) eine hintere Last (1101) mit einer einstellbaren Massenverteilung, wobei die Massenverteilung der hinteren Last durch Reduzierung der Länge der hinteren Last (1101) einstellbar ist, oder
b) einen Konzentrator (1201) mit einer einstellbaren Massenverteilung, wobei die Massenverteilung des Konzentrators (1201) durch Reduzierung der Länge des Konzentrators (1201) eingestellt wird.

5. die zahnärztliche Einheit gemäß Anspruch 4, wobei der Wandler (1204) ein piezokeramischer Ultraschallwandler ist.

6. Die zahnärztliche Einheit gemäß Anspruch 4, wobei der Konzentrator (1201) nicht direkt an der mindestens einen Dentalspitze (601, 605) angebracht ist.

7. Die zahnärztliche Einheit gemäß Anspruch 1, wobei die Resonanzfrequenz diejenige des Handstücks (101) mit der angebrachten befestigten Dentalspitze (601, 605) ist und wobei der Arbeitsfrequenzbereich der Steuereinheit (107) die Resonanzfrequenz einschließt.

8. Die zahnärztliche Einheit gemäß Anspruch 1, wobei der Montageabschnitt (603, 607) mit Gewinde der Dentalspitze (601, 605) Außen-(607) oder Innen-(603) Montagegewinde hat.

## Revendications

1. Appareil dentaire ayant une fréquente de résonance et comprenant une unité de commande (107), une pièce à main (101) à ultrasons en piézocéramique, incluant un transducteur (1204) et un embout dentaire (601, 605), avec une partie de montage filetée (603, 607), ladite pièce à main (101) étant **caractérisée par** un adaptateur (701, 801, 901, 100, 1401, 1501) ayant au moins une partie filetée (703, 803, 903, 1003, 1403, 1503) et des moyens de fixation (705, 805, 905, 1005, 1405, 1505) et dans lequel ladite partie filetée (703, 803, 903, 1003, 1403, 1503) est attachée à une partie filetée (603, 607) correspondante dudit embout dentaire (601, 605), et lesdits moyens de fixation (705, 805, 905, 1005, 1405, 1505) sont attachés à une partie correspondante de ladite pièce à main (101), dans lequel la distribution des masses dudit transducteur (1204) dépend de la masse de l'adaptateur (701, 801, 901, 1001, 1401, 1501).

2. Appareil dentaire selon la revendication 1, dans lequel et lesdits moyens de fixation (705, 805, 905, 1005, 1405, 1505) dudit adaptateur (701, 801, 901, 1001, 1401, 1501) sont des moyens parmi des filets (705, 805, 905, 1005) ou des tiges de montage à baïonnette (1405, 1505).

3. Appareil dentaire selon la revendication 2, dans lequel ledit adaptateur (701, 801, 901, 1001, 1401, 1501) est composé d'un matériau ayant un poids volumique ne dépassant sensiblement pas 7.

4. Appareil dentaire selon la revendication 1, dans lequel ledit transducteur (1204) comprend :
a) une charge arrière (1101) ayant une distribution des masses ajustable et ladite distribution des masses de charge arrière étant ajustable par une réduction de ladite charge arrière (1101), ou
b) un concentrateur (1201), ayant une distribution des masses ajustable et dans lequel la distribution des masses dudit concentrateur (1201) est ajustée par réduction de la longueur dudit concentrateur (1201).

5. Appareil dentaire selon la revendication 4, dans lequel le transducteur (1204) est un transducteur à ultrasons en piézocéramique.

6. Appareil dentaire selon la revendication 4, dans lequel ledit concentrateur (1201) n'est pas directement attaché audit au moins un embout dentaire (601, 605).

7. Appareil dentaire selon la revendication 1, dans lequel ladite fréquence de résonance est celle de la pièce à main (101) avec ledit embout dentaire (601, 605), et dans lequel la plage de fréquences de fonctionnement de l'unité de commande (107) comprend la fréquence de résonance.

8. Appareil dentaire selon la revendication 1, dans lequel la partie de montage filetée (603, 607) dudit embout dentaire (601, 605) comprend des filets de montage mêmes (607) ou femelle (603).
